(19) Europäisches Patentamt
European Patent Office
Office européen des brevets

(11) **EP 1 213 549 B1**

(12) **EUROPÄISCHE PATENTSCHRIFT**

(45) Veröffentlichungstag und Bekanntmachung des Hinweises auf die Patenterteilung:
**29.08.2007   Patentblatt 2007/35**

(51) Int Cl.:
*F25B 49/00* *(2006.01)*     *B60H 1/32* *(2006.01)*

(21) Anmeldenummer: **01126820.8**

(22) Anmeldetag: **10.11.2001**

(54) **Verfahren zur Kältemittel-Füllmengenüberwachung**

Method for monitoring the refrigerant charge

Procédé pour la surveillance de la charge de réfrigérant

(84) Benannte Vertragsstaaten:
**AT DE FR GB IT**

(30) Priorität: **11.12.2000   DE 10061545**

(43) Veröffentlichungstag der Anmeldung:
**12.06.2002   Patentblatt 2002/24**

(73) Patentinhaber: **Behr GmbH & Co. KG**
**70469 Stuttgart (DE)**

(72) Erfinder:
 • **Demuth, Walter, Dipl.-Ing. (FH)**
  **70839 Gerlingen (DE)**
 • **Heilig, Rainer, Dipl.-Ing.**
  **68753 Waghäusel (DE)**
 • **Kirschner, Volker**
  **75417 Mühlacker (DE)**
 • **Kotsch, Martin, Dipl.-Ing.**
  **71634 Ludwigsburg (DE)**

 • **Krauss, Hans-Joachim, Dipl.-Ing. (FH)**
  **70567 Stuttgart (DE)**
 • **Mittelstrass, Hagen, Dipl.-Ing. (BA)**
  **71149 Bondorf (DE)**
 • **Raiser, Harald, Dipl.-Ing.**
  **72336 Balingen (DE)**
 • **Sickelmann, Michael**
  **70435 Stuttgart (DE)**
 • **Staffa, Karl-Heinz, Dipl.-Ing.**
  **70567 Stuttgart (DE)**
 • **Walter, Christoph, Dipl.-Ing.**
  **70376 Stuttgart (DE)**

(56) Entgegenhaltungen:
 EP-A- 0 254 253        DE-A- 19 803 196
 US-A- 4 563 878        US-A- 5 009 076
 US-A- 5 457 965        US-A- 5 586 445
 US-A- 6 112 532        US-A- 6 134 805

EP 1 213 549 B1

**Beschreibung**

Die Erfindung bezieht sich auf ein Verfahren zur Kältemittel-Füllmengenüberwachung in einem Kältemittelkreislauf einer Klima- oder Wärmepumpenanlage mit Kompressor und betriebspunktabhängig im überkritischen Bereich betriebenem Kältemittel nach dem Oberbegriff des Anspruchs 1. Ein solches Verfahren ist aus Dokument US-A-5 009 076 schon bekannt

Unter einem betriebspunktabhängig im überkritischen Bereich betriebenen Kältemittel ist dabei ein solches zu verstehen, das sich wenigstens für einen Teil der möglichen Anlagebetriebszustände im überkritischen Bereich befindet und damit auch im Abschnitt des Kältemittelkreislaufs vom dann als Gaskühler fungierenden "Kondensator" zum Verdampfer gasförmig vorliegt. Insbesondere eignet sich das Verfahren zur Überwachung der $CO_2$-Füllmenge in $CO_2$-Klimaanlagen, wie sie vermehrt in Kraftfahrzeugen eingesetzt werden. Das Verfahren beinhaltet eine Stillstands-Füllmengenüberwachung, d.h. eine Füllmengenüberwachung bei abgeschaltetem Kompressor, und eine Inbetrieb-Füllmengenüberwachung, d.h. eine Füllmengenüberwachung bei eingeschaltetem Kompressor.

In der Patentschrift US 4.745.765 ist eine Inbetrieb-Füllmengenüberwachung beschrieben, bei der anhand der gemessenen Temperatur von überhitztem Kältemittel am Verdampferausgang und der Umgebungstemperatur auf eine eventuelle Unterfüllung geschlossen wird.

In der Patentschrift US 5.481.884 ist ein Verfahren beschrieben, das sowohl eine Stillstands- als auch eine Inbetrieb-Füllmengenüberwachung beinhaltet. Dazu werden im Stillstand der dort betrachteten Klima- oder Wärmepumpenanlage der Kältemitteldruck an der Saugseite des Kompressors und die Umgebungstemperatur gemessen. Zur gemessenen Umgebungstemperatur wird der zugehörige Sättigungsdruck ermittelt und als Referenzdruck herangezogen, mit dem der gemessene Kältemitteldruck verglichen wird. Wenn der gemessene Druck verglichen mit dem Referenzdruck zu gering ist, wird auf eine Unterfüllung geschlossen. Im laufenden Anlagenbetrieb werden Temperatur und Druck des Kältemittels an der Saugseite des Kompressors gemessen. Zum gemessenen Druck wird die zugehörige Sättigungstemperatur ermittelt und als Referenztemperatur herangezogen, mit welcher die gemessene Kältemitteltemperatur verglichen wird. Wenn die gemessene Temperatur zu weit über der Referenztemperatur liegt, wird auf eine Unterfüllung geschlossen.

Der Erfindung liegt als technisches Problem die Bereitstellung eines neuartigen Verfahrens zur Kältemittel-Füllmengenüberwachung der eingangs genannten Art zugrunde, das mit relativ geringem Aufwand eine zuverlässige Erkennung einer Fehlfüllung, d.h. einer Unter- und/oder Überfüllung, an betriebspunktabhängig im überkritischen Bereich betriebenem Kältemittel in einem Kältemittelkreislauf einer Klima- oder Wärmepumpenanlage ermöglicht.

Die Erfindung löst dieses Problem durch die Bereitstellung eines Kältemittel-Füllmengenüberwachungsverfahrens mit den Merkmalen des Anspruchs 1.

Das Verfahren nach Anspruch 1 beinhaltet speziell eine Füllmengenüberwachung im Stillstand der Anlage, wobei Druck und Temperatur des Kältemittels erfasst werden. Auf eine Fehlfüllung wird zum einen geschlossen, wenn der erfasste Kältemitteldruck unter einem Mindestdruckwert liegt, der geeignet vorgegeben werden kann. In diesem Fall liegt eine Unterfüllung, d.h. eine zu geringe Füllmenge, vor. Auf eine Fehlfüllung wird auch geschlossen, wenn die gemessene Kältemitteltemperatur über einem vorgebbaren maximalen Sättigungstemperaturwert liegt und der gemessene Kältemitteldruck außerhalb eines vorgebbaren Solldruckbereiches liegt. Je nachdem, ob eine Unter- oder Überschreitung des Solldruckbereiches erkannt wird, wird auf eine Unter- oder Überfüllung, d.h. eine zu geringe oder zu hohe Füllmenge, geschlossen. Hierbei wird die Tatsache genutzt, dass bei über der maximalen Sättigungstemperatur liegender Kältemitteltemperatur der Druck bei konstanter Temperatur mit sinkender Füllmenge abnimmt bzw. mit steigender Füllmenge zunimmt.

In Ausgestaltung dieser Stillstands-Füllmengenüberwachung wird gemäß Anspruch 2 der Solldruckbereich unter Verwendung eines temperaturabhängig vorgebbaren oberen und/oder eines temperaturabhängig vorgebbaren unteren Druckgrenzwertes festgelegt, was die Tatsache berücksichtigt, dass der Druck mit zunehmender Temperatur bei gleichbleibender Füllmenge ansteigt.

Das Verfahren nach Anspruch 3 beinhaltet speziell eine Füllmengenüberwachung im laufenden Betrieb der Anlage, und zwar dergestalt, dass die Kältemittelüberhitzung am Verdampfer ermittelt wird, d.h. der Temperaturanstieg des Kältemittels über den Verdampfer hinweg, und auf eine Unterfüllung geschlossen wird, wenn die Überhitzung einen vorgebbaren Maximalwert überschreitet.

In einer Ausgestaltung dieser Inbetrieb-Füllmengenüberwachung wird die Kältemittelüberhitzung gemäß Anspruch 4 direkt durch Messung und Differenzbildung der Kältemitteltemperatur am Verdampfereingang und am Verdampferausgang oder indirekt unter Zuhilfenahme der verdampfereintrittsseitigen Kältemitteltemperatur und der verdampferaustrittsseitigen Temperatur eines durch den Verdampfer abgekühlten Mediums, wie z.B. eines Luftstroms, ermittelt. Letzteres kann gegenüber einer direkten Messung der verdampferaustrittsseitigen Kältemitteltemperatur eine messtechnische Vereinfachung bringen.

Eine vorteilhafte Ausführungsform der Erfindung ist in den Zeichnungen dargestellt und wird nachfolgend beschrieben. Hierbei zeigen:

Fig. 1    ein schematisches Blockdiagramm einer $CO_2$-Klimaanlage mit zur $CO_2$-Füllmengen-

überwachung benötigten Mitteln,

Fig. 2   ein Flussdiagramm einer Überwachung der $CO_2$-Füllmenge für die Klimaanlage von Fig. 1 im Stillstand und im laufenden Betrieb und

Fig. 3   ein Druck-Enthalpie-Kennfeld für $CO_2$ zur Veranschaulichung des Kältemittel-Füllmengenüberwachungsverfahrens gemäß Fig. 2.

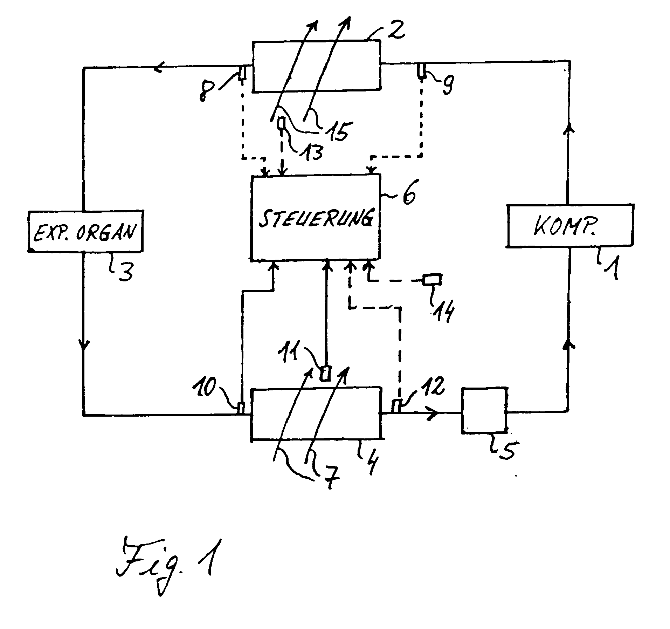

Fig. 1 zeigt schematisch die hier interessierten Komponenten einer Klimaanlage, die mit dem Kältemittel $CO_2$ arbeitet und z.B. in einem Kraftfahrzeug einsetzbar ist. Die Anlage umfasst einen Kältemittelkreislauf mit einem Kompressor 1, dem hochdruckseitig ein Gaskühler 2 nachgeschaltet ist. Letzterem ist ein Expansionsorgan 3 nachgeschaltet, dem ein Verdampfer 4 folgt. Über einen Sammler 5 gelangt das Kältemittel, d.h. das $CO_2$, wieder zum Kompressor 1. Über den Verdampfer 4 wird ein zu kühlender Luftstrom 7 hinweggeführt, der z.B. in den Innenraum eines Kraftfahrzeugs eingeblasen wird. Der Gaskühler 2 wird von einem über ihn hinweggeführten Luftstrom 15 gekühlt.

Eine Klimaanlagen-Steuereinheit 6 steuert den Betrieb der Klimaanlage in einer herkömmlichen und daher hier nicht näher gezeigten Weise. Zusätzlich leistet sie zusammen mit zugehörigen Sensormitteln eine $CO_2$-Füllmengenüberwachung, auf die nachfolgend näher eingegangen wird.

Die hierzu vorgesehenen Sensormittel umfassen einen ersten Kältemitteltemperatursensor 10 an der Eintrittsseite des Verdampfers 4 und einen Lufttemperatursensor 11 an der Luftaustrittsseite des Verdampfers 4. Optional können ein zweiter, an der Austrittsseite des Gaskühlers 2 angeordneter Kältemitteltemperatursensor 8 und/oder ein z.B. zwischen dem Kompressor 1 und dem Gaskühler 2 angeordneter Kältemitteldrucksensor 9 vorgesehen sein, wie in Fig. 1 gestrichelt angedeutet.

Alternativ zu dem Lufttemperatursensor 11 kann ein dritter Kältemitteltemperatursensor 12 an der Austrittsseite des Verdampfers 4 vorgesehen sein, wie in Fig. 1 gestrichelt angedeutet. Des weiteren kann alternativ zum zweiten Kältemitteltemperatursensor 8 ein Lufttemperatursensor 13 an der Lufteintrittsseite des Gaskühlers 2 oder ein Umgebungsluft-Temperatursensor 14 vorgesehen sein, wie in Fig. 1 jeweils gestrichelt angedeutet. Da solche Lufttemperatursensoren 13, 14 häufig zu anderen Zwecken ohnehin vorhanden sind, kann dies gegebenenfalls den Kältemitteltemperatursensor 8 an der Gaskühleraustrittsseite unnötig machen, wenn die damit erzielbare Genauigkeit der Kältemitteltemperaturabschätzung ausreicht.

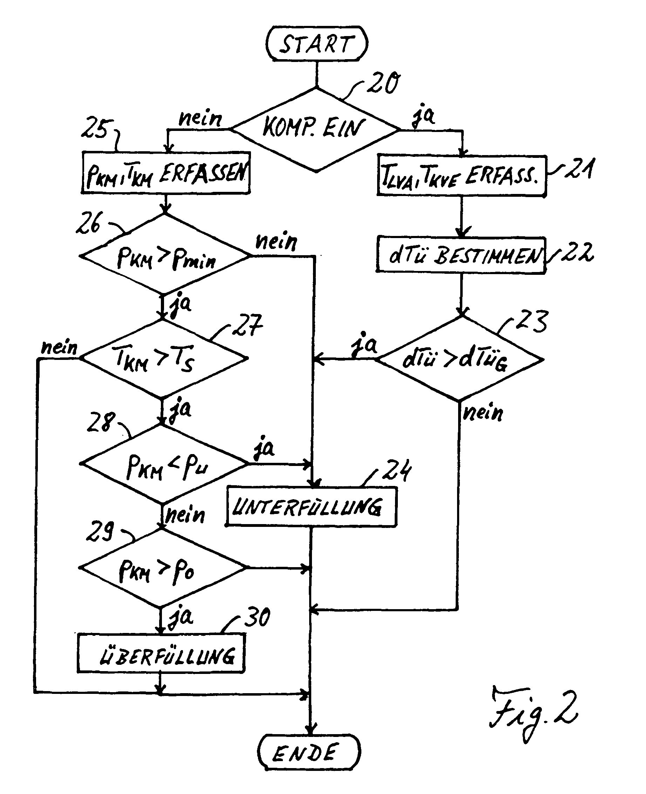

Die Klimaanlagen-Steuereinheit 6 empfängt von den erwähnten Sensoren die zugehörigen Messsignale und wertet diese geeignet zur $CO_2$-Füllmengenüberwachung im Stillstand und im laufenden Anlagenbetrieb aus. Fig. 2 veranschaulicht schematisch das zugehörige Füllmengenüberwachungsverfahren als Flussdiagramm.

Wie aus Fig. 2 ersichtlich, wird von der Steuereinheit 6 zunächst verfahrensgemäß festgestellt, ob sich die Anlage im Betrieb oder im Stillstand befindet, d.h. ob der Kompressor 1 ein- oder ausgeschaltet ist (Schritt 20). Wenn sich die Anlage in Betrieb befindet, erfasst die Steuereinheit 6 über die zugehörigen Temperatursensoren 10, 11 die Kältemitteltemperatur $T_{KVE}$ an der Verdampfereintrittsseite und die Temperatur $T_{LVA}$ des über den Verdampfer 4 hinweggeführten Luftstroms 7 an der Luftaustrittsseite des Verdampfers 4 (Schritt 21). Daraus ermittelt die Steuereinheit 6 die Überhitzung dTü am Verdampfer 4 anhand der Beziehung

$$dT\ddot{u} = T_{KVA} - T_{KVE} = F \cdot (T_{LVA} - T_{KVE}),$$

wobei $T_{KVA}$ die Kältemitteltemperatur an der Verdampferaustrittsseite und F einen Proportionalitätsfaktor bezeichnet. (Schritt 22). Wenn dort der optionale Kältemitteltemperatursensor 12 vorhanden ist, kann mit diesem die Kältemitteltemperatur $T_{KVA}$ an der Verdampferaustrittsseite direkt gemessen werden, und zur Bestimmung der Überhitzung dTü am Verdampfer 4 kann dann direkt deren Definitionsgleichung $dT\ddot{u} = T_{KVA} - T_{KVE}$ herangezogen werden. Alternativ kann die Tatsache genutzt werden, dass die Überhitzung dTü am Verdampfer 4 proportional zur Differenz der Luftaustrittstemperatur $T_{LVA}$ und der Kältemitteleintrittstemperatur $T_{KVE}$ am Verdampfer 4 ist, wobei der Proportionalitätsfaktor F von der über den Verdampfer 4 hinweggeführten Luftmenge und damit von der eingestellten Leistung eines zugehörigen, nicht gezeigten Luftgebläses abhängt, da die Luftmenge den luftseitigen Wärmeübergang am Verdampfer 4 beeinflußt.

Nachdem die Überhitzung dTü am Verdampfer 4 auf die eine oder andere Weise bestimmt worden ist, stellt die Steuereinheit 6 fest, ob die ermittelte momentane Überhitzung dTü über einem vorgegebenen Grenzwert $dT\ddot{u}_G$ von z.B. 5K liegt (Schritt 23). Wenn dies der Fall ist, wird auf eine Unterfüllung, d.h. eine zu geringe Kältemittel-Füllmenge im Kältemittelkreislauf geschlossen, und die Steuereinheit 6 gibt eine entsprechende Unterfüllungsinformation ab (Schritt 24).

Wenn sich die Anlage im Stillstand befindet, erfasst die Steuereinheit 6 die Kältemitteltemperatur $T_{KM}$ z.B. über den Kältemitteltemperatursensor 10 oder 12 am Verdampfer und den Kältemitteldruck $p_{KM}$ im Kältemittelkreislauf direkt über den Drucksensor 9 oder indirekt z.B. über Temperaturerfassung (Schritt 25). Alternativ zur direkten Erfassung der Kältemitteltemperatur kann je nach Sensorikausrüstung der Anlage eine indirekte Bestimmung derselben anhand der über den Umgebungslufttemperatursensor 14 gemessenen Temperatur der Umgebungsluft und/oder der vom zugehörigen Lufttemperatursensor 13 gemessenen Temperatur des über den Gaskühler 2 hinweggeführten Luftstroms 15 an der Lufteintrittsseite des Gaskühlers 2 vorgesehen sein. Die vom Sensor 14 bzw. vom Sensor 13 gemessene Lufttemperatur kann eine ausreichend genaue Abschätzung der Kältemitteltemperatur im Stillstand der Anlage ermöglichen, insbesondere nach längerem Anlagenstillstand oder unter Berücksichtigung der seit dem Abschalten der Anlage verstrichenen Zeitdauer.

Anschließend stellt die Steuereinheit 6 fest, ob der erfasste Kältemitteldruck $p_{KM}$ größer als ein vorgebbarer Mindestdruck $p_{min}$ von z.B. 15bar ist (Schritt 26). Wenn dies nicht der Fall ist, wird dies wiederum als Unterfüllung des Kältekreislaufs gewertet, und die Steuereinheit 6 gibt die Unterfüllungsinformation ab (Schritt 24).

Liegt hingegen der gemessene Kältemitteldruck $p_{KM}$ über dem Mindestdruck $p_{min}$, stellt die Steuereinheit 6 als nächstes fest, ob die erfasste Kältemitteltemperatur $T_{KM}$ über einer vorgegebenen maximalen Sättigungstemperatur $T_s$ liegt (Schritt 27). Letztere ist durch eine vorgegebene Soll-Dichte bzw. optimale Dichte des Kältemittels im Kältemittelkreislauf bestimmt, die beispielsweise bei etwa 250kg/m$^3$ liegt und sich aus dem inneren Volumen des Kältemittelkreislaufs, z.B. ca. 2dm$^3$, und der gewünschten Soll-Menge an $CO_2$ von z.B. ca. 500g ergibt. Gleichzeitig liegt damit der zur vorgebbaren Soll-Dichte gehörige, maximale Sättigungsdruck $p_s$ fest.

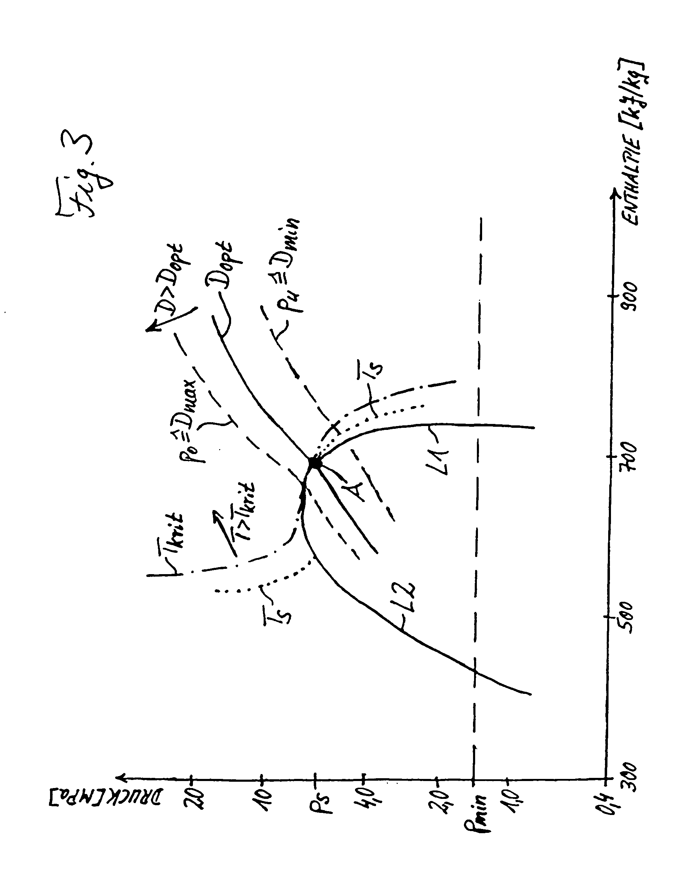

In Fig. 3 sind diese Gegebenheiten anhand des Druck-Enthalpie-Kennfeldes für $CO_2$ veranschaulicht. Zur Orientierung sind die Grenzlinien für gesättigten Dampf L1 und gesättigte Flüssigkeit L2 und die Kennlinie der kritischen Temperatur $T_{krit}$ wiedergegeben, welche die Grenztemperatur darstellt, oberhalb der $CO_2$ nur noch gasförmig vorliegen kann. Des weiteren ist die Dichte-Kennlinie für eine angenommene optimale Dichte $D_{opt}$ von 250kg/m$^3$ gezeigt, deren Schnittpunkt A mit der Grenzlinie L1 für gesättigten Dampf den zu dieser Soll-Dichte $D_{opt}$ gehörigen maximalen Sättigungsdruck $p_s$ und die zugehörige maximale Sättigungstemperatur $T_s$ repräsentiert.

Wenn die erfasste Kältemitteltemperatur $T_{KM}$ nicht höher als die zur vorgegebenen Soll-Dichte $D_{opt}$ gehörige maximale Sättigungstemperatur $T_s$ ist, befindet sich das $CO_2$ innerhalb des Zweiphasen-Koexistenzgebietes. Da in diesem Bereich mit sinkender bzw. steigender Füllmenge der Dampfgehalt zu- bzw. abnimmt und dabei Druck und Temperatur des Kältemittels konstant bleiben, kann aus den gewonnenen Druck- und Temperaturmessdaten nicht auf die Füllmenge geschlossen werden, so dass eine diesbezüglich Aussage unterbleibt. Wenn hingegen die erfasste Kältemitteltemperatur $T_{KM}$ über der maximalen Sättigungstemperatur $T_s$ liegt, d.h. sich das $CO_2$ außerhalb des Zweiphasen-Koexistenzgebietes befindet, fällt der Druck bei konstanter Temperatur mit sinkender Füllmenge und folglich abnehmender Dichte D ab, wie aus dem Kennfeld von Fig. 3 ersichtlich.

Diese Eigenschaft wird zur Füllmengenüberwachung in diesem speziellen Systemzustand dadurch genutzt, dass die Steuereinheit 6 feststellt, ob der gemessene $CO_2$-Druck $p_{KM}$ kleiner als ein unterer Grenzwert $p_u$ ist, der einer vorgegebenen Mindest-Dichte $D_{min}$ und folglich einer bestimmten Mindestfüllmenge entspricht und somit von der aktuellen Kältemitteltemperatur abhängig ist, wie in Fig. 3 durch die zugehörige gestrichelte Kennlinie für $p_o$ bzw. $D_{min}$ illustriert (Schritt 28). Wenn der gemessene Kältemitteldruck $p_{KM}$ den vorgegebenen unteren Druckgrenzwert $p_u$ unterschreitet, erkennt dies die Steuereinheit 6 als Unterfüllung und generiert wiederum die entsprechende Unterfüllungsinformation (Schritt 24).

Wenn der gemessene Kältemitteldruck $p_{KM}$ über dem zur aktuellen Kältemitteltemperatur $T_{KM}$ gehörigen unteren Druckgrenzwert $p_u(T_{KM})$ liegt, stellt die Steuereinheit 6 weiter fest, ob er über einem vorgebbaren oberen Druckgrenzwert $p_o$ liegt, der einer vorgebbaren maximalen Dichte $D_{max}$ entspricht, siehe die zugehörige gestrichelte Kennlinie in Fig. 3, und folglich wiederum von der aktuellen Kältemitteltemperatur $T_{KM}$ abhängig ist (Schritt 29). Wenn dies der Fall ist, wird auf eine Überfüllung, d.h. eine zu hohe Füllmenge, geschlossen, so dass die Steuereinheit 6 eine entsprechende Überfüllungsinformation erzeugt (Schritt 30). Ist dies hingegen nicht der Fall, so liegt der Kältemitteldruck $p_{KM}$ im tolerierbaren Bereich zwischen dem einer vorgebbaren minimalen Dichte $D_{min}$ von z.B. 150kg/m$^3$ entsprechenden unteren Druckgrenzwert $p_u$ und dem einer maximalen Dichte $D_{max}$ von z.B. 350kg/m$^3$ entsprechenden oberen Druckgrenzwert $p_o$.

Wie aus der obigen Beschreibung einer vorteilhaften Realisierung deutlich wird, leistet das erfindungsgemäße Verfahren eine zuverlässige Füllmengenüberwachung für ein in einem Kältemittelkreislauf einer Klimaoder Wärmepumpenanlage zirkulierendes und betriebspunktabhängig im überkritischen Bereich betriebenes Kältemittel, wie $CO_2$, sowohl im Stillstand als auch während des Betriebs der Anlage. Bei erkannter Unteroder Überfüllung wird eine entsprechende Warninformation generiert. Dies lässt sich für verschiedene weitere Maßnahmen nutzen. So kann die Warninformation z.B. optisch über eine Kontrollleuchte zur Anzeige gebracht werden. Des weiteren kann, wenn eine für die Betriebssicherheit kritische Unterfüllung im laufenden Betrieb festgestellt wird, eine automatische Systemdeaktivierung vorgenommen werden, z.B. durch Abschalten des Kompressors mittels Lösen einer zugehörigen Kupplung oder im Fall eines kupplungslosen Kompressors dadurch, dass auf Kurzschlussbetrieb geschaltet wird.

Das erfindungsgemäße Verfahren eignet sich insbesondere auch für $CO_2$-Klimaanlagen mit Niederdrucksammler mit sogenannter "Orifice Tube" und/oder mit Hochdruckregelung, wie sie in Kraftfahrzeugen zum Einsatz kommen. Je nach Anwendungsfall sind Modifikationen der gezeigten Verfahrensvariante innerhalb des von den beigefügten Ansprüchen festgelegten Umfangs der Erfindung möglich. So kann z.B. in weiteren Verfahrensvarianten nur die Stillstands-Füllmengenüberwachung oder nur die Inbetrieb-Füllstandsüberwachung realisiert sein.

**Patentansprüche**

1. Verfahren zur Kältemittel-Füllmengenüberwachung in einem Kältemittelkreislauf einer Klima- oder Wärmepumpenanlage mit Kompressor und betriebspunktabhängig im überkritischen Bereich betriebenem Kältemittel, insbesondere einer $CO_2$ Klimaanlage, das eine Stillstands - Füllmengenüberwachung bei abgeschaltetem Kompressor umfasst und bei der Stillstands-Füllmengenüberwachung sowohl der Druck ($p_{KM}$) als auch die Temperatur ($T_{KM}$) des Kältemittels erfasst werden, **dadurch gekennzeichnet, dass** auf eine Fehlfüllung geschlossen wird, wenn der erfasste Kältemitteldruck kleiner oder gleich einem temperaturunabhängig vorgebbaren Mindestdruckwert ($p_{min}$) ist, oder wenn die erfasste Kältemitteltemperatur über einem vorgebbaren maximalen Sättigungstemperaturwert ($T_S$) und der erfasste Kältemitteldruck außerhalb eines vorgebbaren Solldruckbereiches ($[p_u,p_o]$) liegen.

2. Verfahren nach Anspruch 1, **dadurch gekennzeichnet, dass** der Solldruckbereich nach unten durch einen temperaturabhängig vorgebbaren unteren Druckgrenzwert ($p_0$) und/oder nach oben durch einen temperaturabhängig vorgebbaren oberen Druckgrenzwert ($p_0$) begrenzt wird.

3. Verfahren nach Anspruch 1 oder 2, das eine Inbetrieb-Füllmengenüberwachung bei eingeschaltetem Kompressor umfasst, **dadurch gekennzeichnet, dass** bei der Inbetrieb-Füllmengenüberwachung die Kältemittelüberhitzung (dTü) am Verdampfer (4) der Anlage erfasst und auf eine Fehlfüllung geschlossen wird, wenn die erfasste Überhitzung (dTü) über einem vorgebbaren Grenzwert ($dTü_G$) liegt.

4. Verfahren nach Anspruch 3, **dadurch gekennzeichnet, dass** die Kältemittelüberhitzung (dTü) am Verdampfer (4) anhand der Differenz einer verdampferaustrittsseitig gemessenen Kältemitteltemperatur ($T_{KVA}$) und einer verdampfereintrittsseitig gemessenen Kältemitteltemperatur ($T_{KVE}$) oder anhand der Differenz zwischen einer verdampferaustrittsseitig gemessenen Temperatur ($T_{LVA}$) eines zwecks Abkühlung über den Verdampfer hinweggeführten Mediums und der verdampfereintrittsseitig gemessenen Kältemitteltemperatur ($T_{KVE}$) erfasst wird.

**Claims**

1. A process for monitoring the refrigerant charge in a refrigerant circuit of an air conditioning or heating pump system having a compressor and a refrigerant which is circulated in the supercritical range dependent on operating point, in particular of a $CO_2$ air conditioning system which comprises a standstill charge monitoring function operational when the compressor is switched off, said standstill charge monitoring function determining both the pressure ($p_{KM}$) and the temperature ($T_{KM}$) of the refrigerant, **characterised in that** it is concluded that misfilling has taken place when the recorded refrigerant pressure is less than or equal to a pre-determinable, temperature-independent minimum pressure value ($p_{min}$), or when the recorded refrigerant temperature lies above a pre-determinable, maximum saturation temperature value ($T_S$) and the recorded refrigerant pressure lies outside a pre-determinable reference pressure range ($[p_u,p_o]$).

2. A process in accordance with claim 1, **characterised in that** the reference pressure range is limited downwards by a pre-determinable, temperature-dependent lower pressure limit value ($p_u$) and/or upwards by a pre-determinable, temperature-dependent upper pressure limit value ($p_o$).

3. A process in accordance with claim 1 or 2 which comprises an "in operation" charge monitoring function operational when the compressor is switched on, **characterised in that** the "in-operation" charge monitoring function measures the overheating (dTü) of the refrigerant at the evaporator (4) in the system, and it is concluded that misfilling has taken place when the recorded overheating (dTü) lies above a pre-determinable limit value ($dTü_G$).

4. A process in accordance with claim 3, **characterised in that** refrigerant overheating (dTü) at the evaporator (4) is determined using either the difference between a refrigerant temperature ($T_{KVA}$) measured on the evaporator output side and a refrigerant temperature ($T_{KVE}$) measured on the evaporator input side or using the difference between a temperature ($T_{LVA}$) of a medium discharged via the evaporator for the purposes of cooling measured on the evaporator output side and the refrigerant temperature ($T_{KVE}$) measured on the evaporator input side.

**Revendications**

1. Procédé de contrôle de la quantité de réfrigérant contenue dans un circuit de réfrigérant d'une installation de climatisation ou de pompe à chaleur, comportant un compresseur et des réfrigérants exploités indépendamment du point dynamique dans le domaine subcritique, en particulier d'une installation de climatisation à $CO_2$, qui comporte un contrôle de la quantité en cas d'arrêt lorsque le compresseur est arrêté et pendant le contrôle de la quantité en cas d'arrêt sont détectées la pression ($p_{KM}$) et la température ($T_{KM}$) du réfrigérant, **caractérisé en ce qu'**il en est déduit un remplissage incorrect lorsque la pression enregistrée du réfrigérant est inférieure ou égale à une valeur de pression minimale ($p_{min}$), prédéfinissable en fonction de la température, ou lorsque la température enregistrée du réfrigérant se situe au-dessus d'une valeur de température de saturation ($T_s$) maximale prédéfinissable et la pression enregistrée du réfrigérant se situe en dehors d'une plage de pression de consigne ($[p_u, p_o]$) prédéfinissable.

2. Procédé selon la revendication 1, **caractérisé en ce que** la plage de pression de consigne est limitée vers le bas par une valeur limite inférieure de pression ($p_o$), prédéfinissable en fonction de la température, et/ou vers le haut par une valeur limite supérieure de pression ($p_o$), prédéfinissable en fonction de la température.

3. Procédé selon la revendication 1 ou 2, qui comporte un contrôle de la quantité en cours de service lorsque le compresseur est en marche, **caractérisé en ce que** la surchauffe du réfrigérant (dTü) sur l'évaporateur (4) de l'installation est enregistrée pendant le contrôle de la quantité en cours de service et un remplissage incorrect en est déduit lorsque la surchauffe (dTü) enregistrée se situe au-dessus d'une valeur limite ($dTü_G$) prédéfinissable.

4. Procédé selon la revendication 3, **caractérisé en ce que** la surchauffe du réfrigérant (dTü) sur l'évaporateur (4) est enregistrée à l'appui de la différence entre une température de réfrigérant ($T_{KVA}$) mesurée du côté sortie de l'évaporateur et une température de réfrigérant ($T_{KVE}$) mesurée du côté entrée de l'évaporateur ou à l'appui de la différence entre une température ($T_{LVA}$), mesurée du côté sortie de l'évaporateur, d'un milieu guidé au-delà de l'évaporateur en vue d'un refroidissement, et la température de réfrigérant ($T_{KVE}$) mesurée du côté entrée de l'évaporateur.

Fig. 1

Fig. 2

Fig. 3

EP 1 213 549 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5009076 A
- US 4745765 A
- US 5481884 A